# FASCICULE DE BREVET EUROPEEN

(11) **EP 2 159 014 B1**
(45) Date de publication et mention de la délivrance du brevet: **16.03.2011**
(21) Numéro de dépôt: 09168990.1
(22) Date de dépôt: 31.08.2009
(51) Int. Cl.: B26D 1/36, B26D 1/43, A47J 43/25

(54) **Procede de rangement d'outils de decoupe coniques ou tronconiques dans un appareil electromenager de preparation d'aliments et appareil electromenager pour la mise en oeuvre de ce procede de rangement**
Verfahren zum Aufräumen von konischen oder kegelstumpfartigen Schneidwerkzeugen in einem Elektro-Haushaltsgerät zur Essensvorbereitung, und Elektrohaushaltsgerät für die Umsetzung dieses Aufräumverfahrens
Method for storing cone-shaped or tapered cutting tools in a household cooking appliance and household appliance for implementing this storage method

(30) Priorité: 02.09.2008 FR 0855886
(43) Date de publication de la demande: 03.03.2010
(73) Titulaire: SEB S.A., 69130 Ecully (FR)
(72) Inventeur: Lafond, Jean-Marie, 65420, IBOS (FR); Rouyer, Philippe, 65290, JUILLAN (FR); Suberbie, Nicolas, 65290, JUILLAN (FR)
(74) Mandataire: Blanchard, Eugène Gilles

(56) Documents cités:
- US-A- 4 081 145
- US-B1- 6 766 731

## Description

La présente invention concerne le domaine de la préparation des aliments et plus particulièrement le domaine de la découpe des aliments par rapâge et/ou éminçage.

L'invention propose dans ce cadre un nouveau procédé de rangement d'outils de préparation d'aliments pour un appareil électroménager et un appareil électroménager particulièrement adapté à la mise en oeuvre de ce procédé.

Dans le domaine de invention, on connaît depuis longtemps maintenant différents appareils électroménagers permettant de raper et/ou émincer des aliments. Ces appareils comportent traditionnellement une embase renfermant un moteur électrique apte à entraîner en rotation un outil de découpe, généralement monté dans un accessoire de travail comportant un logement de réception de l'outil de découpe. Afin de permettre différentes tailles et formes de découpe des aliments, ces appareils comportent généralement une pluralité d'outils de découpe que l'utilisateur choisi en fonction de ses besoins. Ces outils peuvent être des disques ou bien des râpes cylindriques ou tronconiques. Dans le dernier cas, les appareils électroménagers offrent en général une fonction de service direct à l'utilisateur, la forme tronconique des outils de découpe facilitant le déversement des aliments découpés au fur et à mesure dans une assiette ou un plat.

De tels appareils sont par exemple décrits dans les documents US 3 635 270, US 5 680 997 ou encore EP 1 610 660.

Il est connu du document US 4 081 145 d'empiler des outils de découpe tronconiques dans le corps d'un boîtier d'appareil. Toutefois l'utilisateur doit soulever le corps du boîtier pour pouvoir ranger les outils de découpe empilés sur la base de l'appareil. Ces dispositions présentent l'inconvénient de nécessiter des manipulations du corps du boîtier pour ranger ou prendre les outils de découpe.

Le but de la présente invention est de faciliter le rangement d'outils de découpe utilisés dans des appareils électroménagers de préparation d'aliments, et qui sont susceptibles d'être emboités les uns dans les autres.

A cet effet, l'invention propose en premier lieu un nouvel appareil électroménager de préparation d'aliments, cet appareil comportant :
- une base motrice formée d'un boîtier renfermant un moteur électrique d'entraînement et des moyens électriques de commande dudit moteur,
- un accessoire de travail solidaire de la base motrice et comportant un magasin de montage d'outils de découpe,
- un jeu de dits outils de découpe présentant une géométrie autorisant leur emboitement les uns dans les autres et leur empilement dans le magasin de l'accessoire de travail, et
- des moyens d'accouplement et d'entraînement en rotation d'un desdits outils de découpe monté dans le magasin de l'accessoire de travail,

Conformément à l'invention, cet appareil comporte également un capot de verrouillage desdits outils de découpe empilés les uns dans les autres dans le magasin de l'accessoire de travail, ledit capot de verrouillage comportant des moyens de blocage sur l'accessoire de travail.

Selon une première caractéristique préférée, le capot de verrouillage est conformé pour épouser les contours des outils de découpe empilés les uns dans les autres. Ainsi, le capot procure un bon recouvrement des outils empilés les uns dans les autres dans le magasin de l'accessoire de travail de l'appareil, évitant ainsi les mouvements relatifs des outils les uns par rapport aux autres lorsque ces derniers sont rangés, ce qui procure une bonne compacité de rangement.

Conformément à une autre caractéristique de l'invention, les moyens de blocage du capot sur l'accessoire de travail sont choisis par l'une des catégories suivantes : moyens de blocage par encliquetage, moyens de blocage par vissage, moyens de blocage à baïonnettes.

Ces différentes catégories de moyens de blocage, classiques, procurent d'excellentes performances de blocage du capot sur l'accessoire de travail et donc un maintien adéquat des outils de découpe en position empilée de rangement.

De façon préférée, les outils de découpe de l'appareil de l'invention présentent tous un corps de forme tronconique et le magasin de l'accessoire de travail définit un logement de réception et de montage de forme complémentaire à celle desdits outils de découpe.

De plus, les outils de découpe présentent également tous une taille identique.

De préférence encore, l'accessoire de travail est amovible de la base motrice, ladite base motrice et ledit accessoire comportant chacun des moyens de fixations complémentaires l'un à l'autre.

Toujours selon l'invention, les moyens d'entraînement et d'accouplement en rotation comportent un axe d'entraînement s'étendant à l'intérieur du magasin de l'accessoire de travail selon un axe Δ, ledit axe d'entraînement étant apte à être mené en rotation par une extrémité postérieure par le moteur électrique dans la base motrice et apte à mener en rotation un dit outil de préparation d'aliments dans le magasin par intermédiaire d'un organe d'accouplement mâle porté par une extrémité antérieure et apte à s'insérer dans un organe d'accouplement femelle prévu dans le fond de chaque dit outil.

Toujours de façon avantageuse, le magasin présente une paroi intérieure inférieure inclinée vers le bas en direction d'une ouverture d'introduction desdits outils de découpe.

Conformément à une autre caractéristique avantageuse de l'appareil de l'invention, l'accessoire de travail comporte une cheminée d'introduction des aliments à préparer, ladite cheminée communiquant par une ouverture avec le magasin de montage pour permettre un contact entre les aliments introduits dans la cheminée et un desdits outils de découpe monté dans le magasin et entraîné en rotation dans celui-ci, ledit appareil comportant en outre de préférence un poussoir de forme complémentaire de la section interne de la cheminée pour pousser les aliments introduits dans cette dernière contre l'outil de préparation monté dans le magasin.

Enfin, le capot de verrouillage présente au moins une ouverture laissant apparaître une partie des outils de découpe logés dans le capot de verrouillage en place sur l'accessoire de travail, ainsi que des pattes prévues pour venir en prise avec une bordure antérieure du magasin de l'accessoire de travail.

Dans un second objet, un nouveau procédé de rangement et de stockage d'outils de préparation d'aliments pour un appareil électroménager de préparation d'aliments, lesdits outils de préparation présentant tous une forme identique autorisant leur emboitement les uns dans les autres pour former un empilement d'outils et l'appareil électroménager comportant un accessoire de travail comprenant un magasin de montage d'un dit outil de préparation délimitant un logement de forme sensiblement complémentaire de la forme desdits outils et comportant également des moyens d'accouplement et d'entraînement en rotation d'un dit outil dans le magasin de l'accessoire de travail. Ce procédé est caractérisé en ce que l'on emboîte lesdits outils les uns dans les autres dans le magasin de l'accessoire de travail et en ce qu'on maintient l'empilement ainsi formé dans le magasin par l'intermédiaire d'un capot de verrouillage recouvrant ledit empilement et comportant des moyens de blocage sur l'accessoire de travail.

De préférence, la mise en oeuvre de ce procédé de rangement est facilitée pour des outils de préparation d'aliments qui présentent une forme conique ou tronconique.

Conformément à une caractéristique préférée du procédé de l'invention, on emboite lesdits outils les uns dans les autres dans le magasin de l'accessoire de travail selon un axe Δ formant également l'axe d'entraînement en rotation des outils dans le magasin de l'accessoire de travail, ledit axe étant de préférence sensiblement horizontal ou légèrement incliné vers le bas par rapport à l'horizontale.

Diverses autres caractéristiques ressortent de la description faite ci-dessous en référence aux dessins annexés qui montrent, à titre d'exemples non limitatifs, des formes de réalisation de l'objet de l'invention.

Sur les figures jointes :
- la figure 1 représente en vue de côté un appareil électroménager selon la présente invention recevant un jeu d'outils de découpe tronconiques empilés et rangés dans le magasin de l'accessoire de travail de l'appareil et maintenu à l'aide d'un capot de verrouillage conformément au procédé de rangement de l'invention ;
- la figure 2 représente en perspective et en éclaté le mode de rangement d'outils de découpe tronconiques dans le magasin d'un accessoire de découpe adaptable sur l'appareil de la figure 1 ;
- la figure 3 représente vue en coupe longitudinale l'accessoire de découpe de l'appareil électroménager de la figure 1 avec un jeu d'outils de découpe conformes à la présente invention en position empilée de rangement dans le magasin de l'accessoire de découpe ;
- la figure 4 représente en vue de face l'accessoire de découpe de l'appareil de la figure 1 avec un outil de découpe monté dans le magasin de l'accessoire et montrant l'accouplement mâle-femelle entre un axe menant d'entrainement et l'outil de découpe.

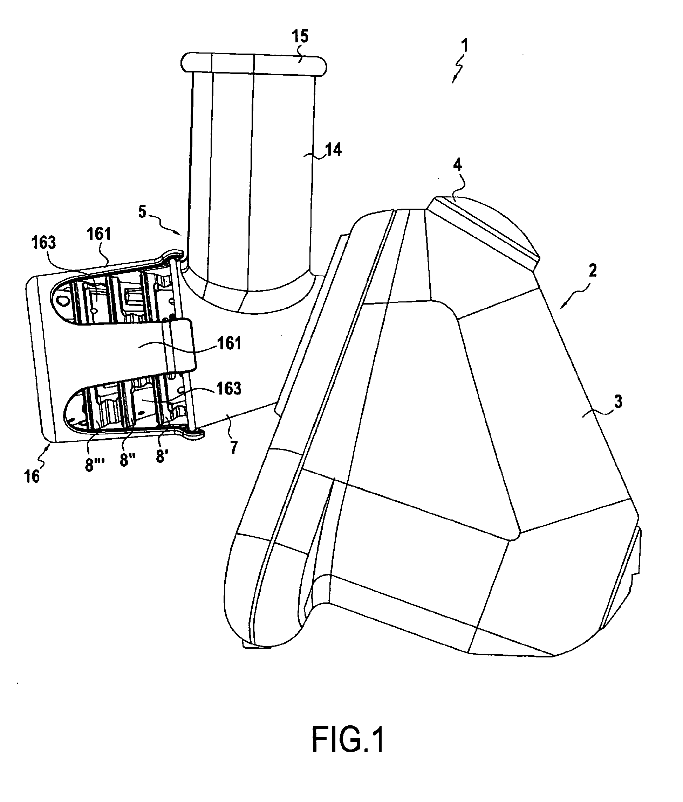

La figure 1 représente un appareil électroménager 1 de préparation par découpe d'aliments conforme à la présente invention.

L'appareil électroménager 1 de l'invention est formé d'une base motrice 2 comprenant un boîtier 3 renfermant un moteur électrique et des circuits électronique de commande du moteur (non représentés) et reliés à des organes de commande tels que des interrupteurs 4 localisés sur le boitier 3 pour permettre la mise en fonction et l'arrêt de l'appareil 1 par un utilisateur.

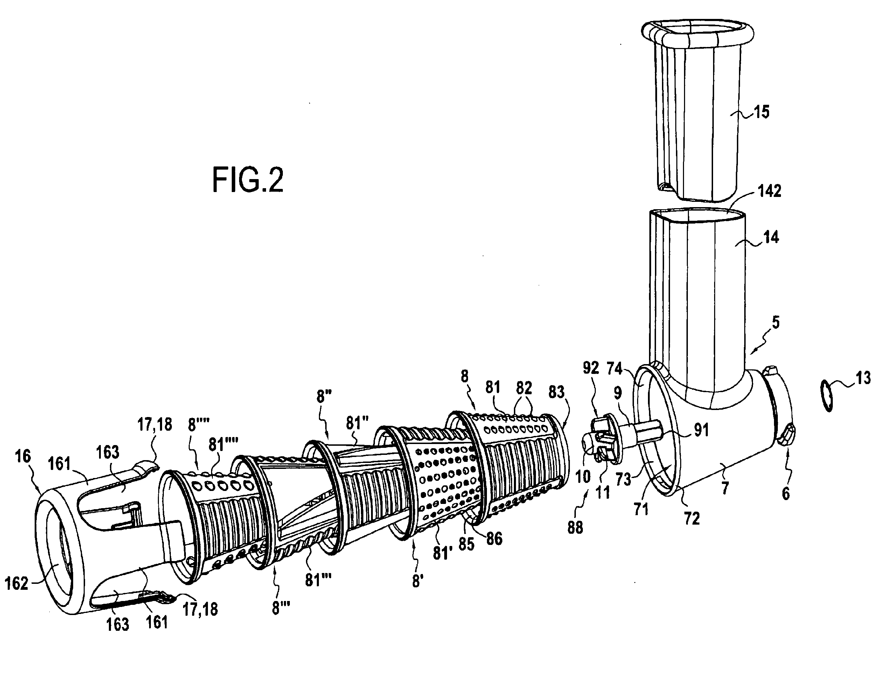

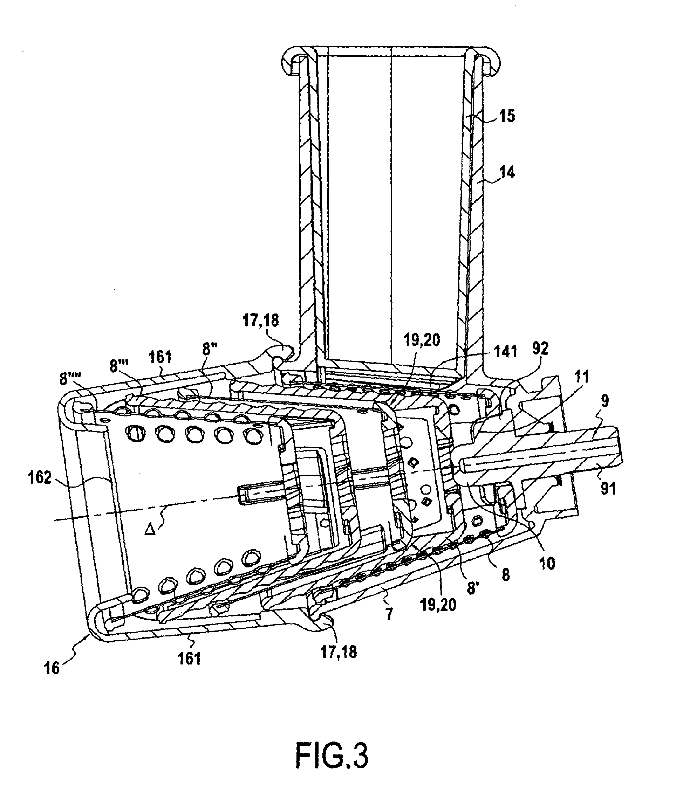

Sur le boîtier 3 est fixé un accessoire de découpe 5, représenté en détail sur les figures 2 et 3, de préférence amovible du boîtier 3 et apte à être fixé sur celui-ci par une bague de fixation 6, notamment à vis ou à baïonnette. L'accessoire de découpe 5 comporte un magasin 7 délimitant un logement interne 71 de dimensions et formes adaptées pour recevoir et permettre le montage d'un outil de découpe 8 tronconique également conforme à la présente invention et décrit ci-après plus en détail. Le magasin 7 présente une paroi intérieure inférieure 73 inclinée vers le bas en direction d'une ouverture d'introduction 74 de l'outil de découpe 8.

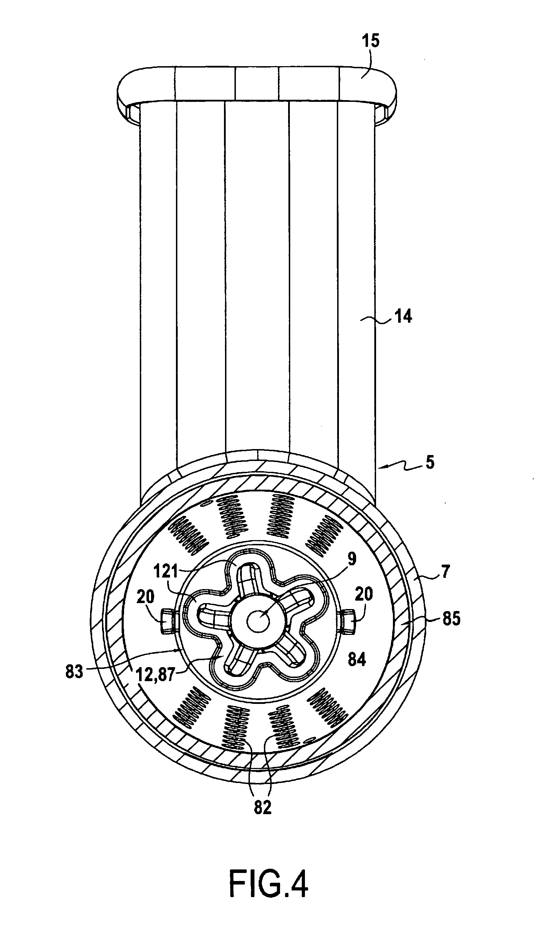

Cet outil de découpe 8 comporte un corps 81 de forme tronconique présentant dans sa paroi tronconique des moyens de découpe 82. Le corps 81 présente une première extrémité 83 comportant au moins un moyen d'accouplement et d'entrainement en rotation 87. Plus particulièrement, le moyen d'accouplement et d'entrainement en rotation 87 situé à la première extrémité 83 du corps 81 est un orifice d'entraînement femelle 12. La première extrémité 83 du corps 81 de l'outil 8 est avantageusement fermée par une paroi de fond 84 au sein de laquelle est découpé l'orifice d'entraînement femelle 12. L'orifice d'entraînement femelle 12 peut notamment être en forme d'étoile, comportant par exemple cinq branches 121 dans l'exemple particulier représenté sur la figure 4. Une deuxième extrémité 85 du corps 81 est ouverte et forme une ouverture de sortie 86 pour les aliments découpés. Le corps 81 de l'outil de découpe 8 est avantageusement réalisé en matière plastique surmoulée sur les moyens de découpe 82 formés par une ou plusieurs tôles métalliques. A titre de variante, l'outil de découpe 8 pourrait notamment être réalisé en métal embouti.

Comme cela ressort plus particulièrement des figures 2 et 3, un outil de découpe 8 tel que précédemment décrit est adapté pour être monté libre en rotation dans le magasin 7 de l'accessoire de découpe 5 et est apte à être entrainé par un axe d'entraînement 9. Cet axe d'entraînement 9 coopère par une extrémité postérieure 91 avec le moteur électrique localisé dans la base motrice 2 et par une extrémité antérieure 92 avec l'outil de découpe 8. L'accouplement entre l'outil de découpe 8 et l'axe d'entraînement 9 est réalisé de façon avantageuse par l'intermédiaire d'un organe d'accouplement mâle 10 portant des dents 11 adaptées pour engrener les branches 121 de l'orifice d'accouplement femelle 12 en forme d'étoile agencé dans le fond 84 de l'outil 8 comme représenté sur la figure 4.

La coaxialité et le positionnement relatifs de l'axe d'entraînement 9 par rapport au magasin 7 et à l'outil de découpe 8 sont assurés par une rondelle de blocage 13 enfilée sur l'axe d'entraînement 9 par son extrémité postérieure 91 et venant buter contre le fond du magasin 7 recevant l'outil de découpe 8.

L'accessoire de découpe 5 comporte également une cheminée 14 d'introduction des aliments à découper. La cheminée 14 est solidaire du magasin 7. La cheminée 14 est formée par un tronçon tubulaire débouchant à ses deux extrémités qui forment respectivement un puits 141 de communication avec l'intérieur du magasin 7 et un orifice d'introduction 142 des aliments à découper dans la cheminée 14. Cette cheminée reçoit un poussoir 15 destiné à pousser les aliments à découper dans la cheminée 14 depuis l'orifice d'introduction 142 vers le puits 141 pour permettre la découpe des aliments par l'outil de découpe 8 entrainé en rotation par l'axe d'entraînement 9 et le moteur électrique à l'intérieur de la base motrice 2 de l'appareil 1 lorsque l'utilisateur actionne l'interrupteur de commande 4.

Comme représenté sur les figures 1 à 3, l'appareil électroménager 1 de l'invention comporte un jeu d'outils de découpe 8, 8', 8", 8"', 8"" et des moyens d'accouplement et d'entraînement en rotation 88 d'un desdits outils de découpe 8, 8', 8", 8"', 8"" monté dans le magasin 7 de l'accessoire de travail 5. Les moyens d'accouplement et d'entrainement en rotation 88 comportent l'axe d'entraînement 9 apte à coopérer par la première extrémité 91 avec le moteur électrique renfermé dans le boîtier 3 de la base motrice 2 et portant à la seconde extrémité 92 l'organe mâle 10 adapté pour engrener l'orifice d'entraînement femelle 12 situé à la première extrémité 83 du corps 81 de l'outil de découpe 8 monté dans le magasin 7 de l'accessoire de travail 5.

Les outils de découpe 8, 8', 8", 8"', 8"" comportent des moyens de découpe 82, 82', 82", 82"', 82"" et un corps 81, 81', 81", 81"', 81"" de forme tronconique adaptée pour permettre, conformément au procédé de rangement de l'invention, le rangement par emboitement et empilement des outils 8, 8', 8", 8"', 8"" les uns dans les autres directement dans le logement 71 délimité par le magasin 7 de l'accessoire de découpe 5 de l'appareil. Ainsi les différents outils de découpe 8, 8, 8", 8"', 8"" présentent une géométrie autorisant leur emboitement les uns dans les autres pour former un empilement d'outils. Dans le mode de réalisation illustré, les outils de découpe 8, 8', 8", 8"', 8"" présentent une taille identique.

Ce rangement des outils de découpe 8, 8', 8", 8"', 8"" s'effectue ainsi par emboitement desdits outils 8, 8', 8", 8"', 8"" les uns dans les autres dans le magasin 7 selon un axe d'empilement a qui est également l'axe de rotation de l'axe d'entraînement 9 en rotation d'un outil 8 pour réaliser la découpe d'aliments.

Afin de maintenir les outils emboités les uns dans les autres en position empilée dans le magasin 7, on utilise conformément à la présente invention un capot de verrouillage 16 qui comporte des moyens de blocage 17 sur l'accessoire de découpe 5, et plus particulièrement de préférence sur une bordure antérieure 72 du magasin 7 de celui-ci.

Le capot de verrouillage 16 est conformé pour épouser les contours des outils de découpe 8, 8', 8", 8"', 8"" empilés les uns dans les autres.

Le capot de verrouillage 16 présente une forme adéquate pour empêcher tout glissement ou mouvement des outils de découpe 8, 8', 8", 8"', 8"" les uns par rapport aux autres une fois bloqué par ses moyens de blocage 17 sur l'accessoire 5.

Comme représenté notamment sur les figures 1 à 3, les moyens de blocage 17 du capot de verrouillage 16 peuvent notamment être formés, de la façon la plus simple, par des crochets 18 adaptés pour réaliser un blocage du capot 16 par encliquetage ou accrochage sur la bordure antérieure circulaire 72 du magasin 7 de l'accessoire 5. De tels crochets 18 peuvent être formés, comme représenté sur les figures, au bout de pattes 161 du capot de verrouillage 16, solidaires d'un plateau d'appui 162 s'engageant dans l'outil de découpe 8"" d'extrémité de l'empilement d'outils dans le magasin 7. Mais bien entendu, d'autres types de moyens de blocage 17 peuvent bien sûr être envisagés sans sortir du cadre de la présente invention, notamment des moyens de blocage par vis ou des moyens de blocage par baïonnettes. Tel que montré sur la figure 1, les pattes 161 ménagent des ouvertures 163 laissant apparaître une partie des outils de découpe 8, 8', 8", 8"', 8"" logés dans le capot de verrouillage 16 en place sur l'accessoire de travail 5. Les pattes 161 permettent également de faciliter la mise en place et le retrait du capot de verrouillage 16. Les pattes 161 sont prévues pour venir en prise avec la bordure antérieure 72 du magasin 7.

Le capot de verrouillage 16 peut être réalisé par moulage de matière plastique bien que cette forme de réalisation ne soit pas limitative.

Les outils de découpe 8, 8', 8", 8"', 8"" comportent de façon avantageuse au moins un moyen anti-accouplement 19 permettant de limiter la profondeur d'emboîtement des outils les uns dans les autres lors de leur rangement et ainsi d'empêcher le coincement des outils de découpe 8, 8', 8", 8"', 8"" entre eux et par conséquent leur faculté potentielle à s'entrainer mutuellement en rotation. Ainsi, même si l'outil de découpe 8 inséré dans le logement 71 du magasin 7 est entrainé par l'axe menant 9 en rotation, un second autre outil de découpe 8' inséré dans l'outil de découpe 8 n'est pas entrainé en rotation.

Comme cela ressort plus particulièrement de la figure 3, le(s) moyen(s) anti-accouplement 19 consiste(nt) de façon préférée en des ergots 20 saillants sur une paroi interne du corps des outils de découpe 8, 8', 8", 8"', 8"". Ces ergots 20 forment des cales d'appui des outils de découpe 8, 8', 8", 8"', 8"" les uns dans les autres évitant ainsi leur enfoncement et leur coincement leur de leur rangement dans le magasin 7 de l'appareil 1.

Ces ergots 20 procurent avantageusement, outre une surface d'appui évitant l'enfoncement et le coincement des outils de découpe 8, 8', 8", 8"', 8"" les uns dans les autres, une surface de glissement des outils emboîtés les uns par rapport aux autres. Cette surface de glissement évite notamment la transmission d'un couple de rotation par effet de frottement entre les ergots 20 sur la paroi interne d'un premier outil de découpe 8 et le fond 84 d'un second outil de découpe 8' emboîté dans le premier outil de découpe 8.

Le mode de rangement d'outils tronconiques proposé par l'invention n'augmente pas de façon notable l'encombrement général de l'appareil électroménager 1, qui peut toujours être facilement stocké dans un placard par exemple. Le rangement des outils de découpe 8, 8', 8", 8"', 8"" est réalisé de façon économique avec une seule pièce additionnelle qui est le capot de verrouillage 16 et qui s'intègre très facilement à l'appareil lui-même. Ainsi il est possible pour l'utilisateur d'avoir toujours les outils de découpe 8, 8', 8", 8"', 8"" à disposition.

L'utilisation de l'appareil électroménager 1 de l'invention et son rangement sont particulièrement intuitives. Lorsque l'on veut préparer un plat à base de légumes rapés ou émincés par exemple, il suffit de sortir l'appareil 1 de sa zone de rangement et de poser sa base motrice 2 sur un plan de travail stable. On retire ensuite le capot de verrouillage 16 et l'on sort les différents outils 8, 8', 8", 8"', 8"" de l'appareil emboités les uns dans les autres dans le magasin 7 de l'accessoire 5 pour choisir l'outil le mieux adapté à la préparation que l'on souhaite réaliser. Une fois le bon outil 8 choisi, on monte celui directement dans le magasin 7 en veillant à bien accoupler ledit outil 8 par son orifice d'accouplement avec l'organe d'accouplement mâle de l'axe menant 9 lié au moteur dans la base motrice 2. Il suffit ensuite de brancher l'appareil 1 au secteur électrique par une prise idoine, puis d'introduire les aliments à découper dans la cheminée 14 et de mettre l'appareil en marche en appuyant sur l'interrupteur 4. L'outil 8 monté dans le magasin 7 entre alors en rotation sous l'action de l'axe menant 9 et du moteur et les aliments dans la cheminée 14, poussés le cas échéant par l'utilisateur à l'aide du poussoir 15 sont rapés et/ou émincés par l'outil 8 et déversés par l'orifice d'extrémité antérieur 83 de celui-ci dans un plat ou une assiette.

Une fois les aliments préparés, il convient d'arrêter l'appareil 1, de le débrancher puis de démonter l'outil 8 de l'intérieur du magasin 7 pour le nettoyer, et de nettoyer également le cas échéant l'accessoire 5 si celui-ci est démontable. Lorsque ces éléments ont été nettoyés, il suffit alors de ranger à nouveau le jeu d'outils 8, 8', 8", 8"', 8"" dans le magasin 7 de l'accessoire 5 en les empilant les uns dans les autres puis de maintenir cet empilement d'outils par l'intermédiaire du capot de verrouillage 16 que l'on vient coiffer sur l'empilement d'outils 8 et clipser par ses crochets 18 sur l'accessoire 5.

Dans l'exemple particulier représenté et de façon préférée, les outils de découpe 8, 8', 8", 8"', 8"" sont tronconiques ce qui procure facilité et compacité d'empilement et bonne efficacité de la coupe des aliments. Toutefois, il convient de noter que la compacité de l'empilage dépend à la fois de la pente du cône et de l'épaisseur de la paroi de l'outil.

Les avantages de la solution de rangement d'outils proposée par l'invention sont les suivants :
- les outils sont rangés dans une cavité fonctionnelle de l'appareil sans procuration d'enceinte ou d'espace de rangement additionnel ;
- l'encombrement de l'empilement d'outil est minimal ;
- le rangement se fait sur une partie accessible et visible de l'appareil, ce qui permet d'avoir toujours les outils sous la main ;
- enfin cette solution de rangement est simple et de coût extrêmement réduit.

L'invention n'est pas limitée aux exemples décrits et représentés car diverses modifications peuvent y être apportées sans sortir de son cadre. Evidemment l'étendue de la protection de l'invention reste définie par les revendications.

## Revendications

1. Appareil électroménager (1) de préparation d'aliments, comportant :
- une base motrice (2) formée d'un boîtier (3) renfermant un moteur électrique d'entraînement et des moyens électriques de commande dudit moteur,
- un accessoire de travail (5) solidaire de la base motrice (2) et comportant un magasin (7) de montage d'outils de découpe (8, 8', 8", 8"', 8""),
- un jeu de dits outils de découpe (8, 8', 8", 8"', 8"") présentant une géométrie autorisant leur emboitement les uns dans les autres et leur empilement dans le magasin (7) de l'accessoire de travail (5), et
- des moyens (88) d'accouplement et d'entraînement en rotation d'un desdits outils de découpe (8, 8', 8", 8"', 8"") monté dans le magasin (7) de l'accessoire de travail (5),
**caractérisé en ce qu'**il comporte un capot de verrouillage (16) desdits outils de découpe (8, 8', 8", 8"', 8"") empilés les uns dans les autres dans le magasin (7) de l'accessoire de travail (5), ledit capot de verrouillage (16) comportant des moyens de blocage (17) sur l'accessoire de travail (5).

2. Appareil électroménager selon la revendication 1, **caractérisé en ce que** le capot de verrouillage (16) est conformé pour épouser les contours des outils de découpe (8, 8', 8", 8"', 8"") empilés les uns dans les autres.

3. Appareil électroménager selon l'une des revendications 1 ou 2, **caractérisé en ce que** les moyens de blocage (17) du capot de verrouillage (16) sur l'accessoire de travail (5) sont choisis par l'une des catégories suivantes : moyens de blocage par encliquetage, moyens de blocage par vissage, moyens de blocage à baionnettes.

4. Appareil électroménager selon l'une des revendications 1 à 3, **caractérisé en ce que** les outils de découpe (8, 8', 8", 8"', 8"'') présentent un corps (81) de forme tronconique et **en ce que** le magasin (7) de l'accessoire de travail (5) définit un logement (71) de réception et de montage de forme complémentaire à celle desdits outils de découpe (8, 8', 8", 8"', 8"").

5. Appareil électroménager selon l'une des revendications 1 à 4, **caractérisé en ce que** les outils de découpe (8, 8', 8", 8"', 8"") présentent une taille identique.

6. Appareil électroménager selon l'une des revendications 1 à 5, **caractérisé en ce que** l'accessoire de travail (5) est amovible de la base motrice (2), ladite base motrice (2) et ledit accessoire de travail (5) comportant chacun des moyens de fixations complémentaires l'un à l'autre.

7. Appareil électroménager selon l'une des revendications 1 à 6, **caractérisé en ce que** les moyens d'entraînement et d'accouplement en rotation (88) comportent un axe d'entraînement (9) s'étendant à l'intérieur du magasin (7) de l'accessoire de travail (5) selon un axe Δ, ledit axe d'entraînement (9) étant apte à être mené en rotation par une extrémité postérieure (91) par le moteur électrique dans la base motrice (2) et apte à mener en rotation un desdits outils de découpe (8) monté dans le magasin (7) par l'intermédiaire d'un organe d'accouplement mâle (10) porté par une extrémité antérieure (92) et apte à s'insérer dans un organe d'accouplement femelle (12) prévu dans un fond (84) dudit outil de découpe (8).

8. Appareil électroménager selon la revendication 7, **caractérisé en ce que** le magasin (7) présente une paroi intérieure inférieure (73) inclinée vers le bas en direction d'une ouverture d'introduction (74) desdits outils de découpe (8, 8', 8", 8"', , 8"'') .

9. Appareil électroménager selon l'une des revendications 1 à 8, **caractérisé en ce que** ledit accessoire de travail (5) comporte une cheminée (14) d'introduction des aliments à préparer, ladite cheminée (14) communiquant par une ouverture (141) avec le magasin (7) pour permettre un contact entre les aliments introduits dans la cheminée (14) et un desdits outils de découpe (8) monté dans le magasin (7) et entraîné en rotation dans le magasin (7).

10. Appareil électroménager selon la revendication 9, **caractérisé en ce qu'**il comporte un poussoir (15) de forme complémentaire à la section interne de la cheminée (14) pour pousser les aliments introduits dans la cheminée (14) contre ledit outil de découpe (8) monté dans le magasin (7).

11. Appareil électroménager selon l'une des revendications 1 à 10, **caractérisé en ce que** le capot de verrouillage (16) présente au moins une ouverture (163) laissant apparaître une partie des outils de découpe (8, 8', 8", 8"', 8"") logés dans le capot de verrouillage (16) en place sur l'accessoire de travail (5).

12. Appareil électroménager selon l'une des revendications 1 à 11, **caractérisé en ce que** le capot de verrouillage (16) présente des pattes (161) prévues pour venir en prise avec une bordure antérieure (72) du magasin (7).

13. Procédé de rangement et de stockage d'outils de découpe (8, 8', 8", 8"', 8"") pour un appareil électroménager (1) de préparation d'aliments, lesdits outils de découpe (8, 8', 8", 8"', 8"") présentant une géométrie autorisant leur emboitement les uns dans les autres pour former un empilement d'outils et l'appareil électroménager (1) comportant un accessoire de travail (5) comprenant un magasin (7) délimitant un logement (71) de forme sensiblement complémentaire à la géométrie desdits outils de découpe (8, 8', 8", 8"', 8""), ainsi que des moyens (88) d'accouplement et d'entraînement en rotation pour l'un desdits outils de découpe (8, 8', 8", 8"', 8"") monté dans le logement (71) du magasin (7), procédé **caractérisé en ce que** l'on emboîte lesdits outils de découpe (8, 8', 8", 8"', 8"") les uns dans les autres dans le magasin (7) de l'accessoire de travail (5) et **en ce qu'**on maintient l'empilement ainsi formé dans le magasin (7) par l'intermédiaire d'un capot de verrouillage (16) recouvrant au moins partiellement ledit empilement et comportant des moyens de blocage (17) sur l'accessoire de travail (5).

14. Procédé selon la revendication 13, **caractérisé en ce que** les outils de découpe (8, 8', 8", 8"', 8"") présentent une forme tronconique.

15. Procédé selon la revendication 13 ou la revendication 14, **caractérisé en ce que** l'on emboite lesdits outils de découpe (8, 8', 8", 8"', 8"") les uns dans les autres dans le magasin (7) de l'accessoire de travail (5) selon un axe Δ correspondant à un axe d'entraînement (9) en rotation desdits outils de découpe (8, 8', 8", 8"', 8"") dans le magasin (7) de l'accessoire de travail (5).

16. Procédé selon l'une des revendications 13 à 15, **caractérisé en ce que** ledit axe Δ est horizontal ou légèrement incliné vers le bas par rapport à l'horizontale.

## Claims

1. A food processor electric household appliance (1) comprising:
· a motor base (2) formed by a housing (3) containing an electric drive motor and electrical control means for said motor;
· a work accessory (5) secured to the motor base (2) and including a magazine (7) for mounting cutter tools 8, 8', 8'', 8''', 8'''') ;
· a set of said cutter tools (8, 8', 8", 8"', 8"") presenting a shape that allows them to be engaged in one another and stacked in the magazine (7) of the work accessory (5); and
· coupling and rotary drive means (88) for engaging one of said cutter tools (8, 8', 8", 8"', 8"") mounted in the magazine (7) of the work accessory (5);
the appliance being **characterized in that** it includes a locking cover (16) for locking said cutter tools (8, 8', 8", 8"', 8"") stacked in one another in the magazine (7) of the work accessory (5), said locking cover (16) including blocking means (17) for securing it to the work accessory (5).

2. An electric household appliance according to claim 1, **characterized in that** the locking cover (16) is shaped to match the outlines of the cutter tools (8, 8', 8", 8"', 8"") stacked in one another.

3. An electric household appliance according to claim 1 or claim 2, **characterized in that** the blocking means (17) of the locking cover (16) for securing it to the work accessory (5) are selected from one of the following categories: snap-fastening blocking means; screw-fastening blocking means; bayonet-fastening blocking means.

4. An electric household appliance according to any one of claims 1 to 3, **characterized in that** each cutter tool (8, 8', 8", 8"', 8"") presents a body (81) of frustoconical shape, and **in that** the magazine (7) of the work accessory (5) defines a reception and mounting housing (71) of shape complementary to the shape of said cutter tools (8, 8', 8", 8"', 8"").

5. An electric household appliance according to any one of claims 1 to 4, **characterized in that** the cutter tools (8, 8', 8", 8"', 8"") present a size that is identical.

6. An electric household appliance according to any one of claims 1 to 5, **characterized in that** the work accessory (5) is removable from the motor base (2), said motor base (2) and said work accessory (5) each including complementary fastening means for fastening to each other.

7. An electric household appliance according to any one of claims 1 to 6, **characterized in that** the drive and rotary coupling means (88) comprise a drive shaft (9) extending inside the magazine (7) of the work accessory (5) along an axis Δ, said drive shaft (9) being suitable for being driven in rotation via a posterior end (91) by the electric motor in the motor base (2), and being suitable for driving in rotation one of said cutter tools (8) mounted in the magazine (7) via a male coupling member (10) carried by an anterior end (92) and suitable for inserting in a female coupling member (12) provided in an end wall (84) of said cutter tool (8).

8. An electric household appliance according to claim 7, **characterized in that** the magazine (7) presents a bottom inside wall (73) sloping downwards towards an insertion opening (74) for inserting said cutter tools (8, 8', 8", 8"' 8"").

9. An electric household appliance according to any one of claims 1 to 8, **characterized in that** said work accessory (5) includes a chimney (14) for inserting food to be processed, said chimney (14) communicating via an opening (141) with the magazine (7) to enable the food inserted into the chimney (14) to make contact with one of said cutter tools (8) mounted in the magazine (7) and driven in rotation in the magazine (7).

10. An electric household appliance according to claim 9, **characterized in that** it includes a pusher (15) of shape complementary to the inside section of the chimney (14) for pushing the food inserted into the chimney (14) against said cutter tool (8) mounted in the magazine (7).

11. An electric household appliance according to any one of claims 1 to 10, **characterized in that** the locking cap (16) presents at least one opening (163) revealing some of the cutter tools (8, 8', 8", 8"', 8"") housed in the locking cap (16) when it is in position on the work accessory (5).

12. An electric household appliance according to any one of claims 1 to 11, **characterized in that** the locking cap (16) presents tabs (161) that are designed to engage with an anterior margin (72) of the magazine (7).

13. A method of stowing and storing cutter tools (8, 8', 8", 8"', 8"") for a food processor electric household appliance (1), said cutter tools (8, 8', 8", 8"', 8"") presenting a shape that enables them to be engaged in one another to form a stack of tools, and the electric household appliance (1) including a work accessory (5) having a magazine (7) defining a housing (71) of shape substantially complementary to the shape of said cutter tools (8, 8', 8", 8"', 8""), together with coupling and rotary drive means (88) for engaging one of said cutter tools (8, 8', 8", 8"', 8"") mounted in the housing (71) of the magazine (7), the method being **characterized in that** said cutter tools (8, 8', 8", 8"', 8"") are engaged in one another in the magazine (7) of the work accessory (5), and **in that** the stack as formed in this way in the magazine (7) is held by means of a locking cap (16) covering said stack at least in part and including blocking means (17) for securing it to the work accessory (5) .

14. A method according to claim 13, **characterized in that** the cutter tools (8, 8', 8", 8"', 8"") present a frustoconical shape.

15. A method according to claim 13 or claim 14, **characterized in that** said cutter tools (8, 8', 8", 8"', 8"") are engaged in one another in the magazine (7) of the work accessory (5) along an axis Δ corresponding to a rotary drive shaft (9) for driving said cutter tools (8, 8', 8", 8"', 8"") in the magazine (7) of the work accessory (5).

16. A method according to any one of claims 13 to 15, **characterized in that** said axis Δ is horizontal or slopes gently downwards relative to the horizontal.

## Patentansprüche

1. Elektrisches Haushaltsgerät (1) für die Zubereitung von Lebensmitteln, umfassend:
- eine Antriebsbasis (2), die von einem Gehäuse (3) gebildet ist, das einen Antriebselektromotor sowie elektrische Mittel zur Steuerung des Motors enthält,
- ein Arbeitszubehörteil (5), das mit der Antriebsbasis (2) fest verbunden ist und ein Magazin (7) zum Anbringen von Schneidewerkzeugen (8, 8', 8", 8"', 8"") umfaßt,
- einen Satz von Schneidewerkzeugen (8, 8', 8", 8"', 8""), die eine Geometrie aufweisen, die ihr Ineinanderstecken und ihr Stapeln in dem Magazin (7) des Arbeitszubehörteils (5) zuläßt, sowie
- Mittel (88) zum Drehkuppeln und -antreiben von einem der Schneidewerkzeuge (8, 8', 8", 8'", 8""), das in dem Magazin (7) des Arbeitszubehörteils (5) angebracht ist,
**dadurch gekennzeichnet, daß** es eine Kappe zum Verriegeln (16) der in dem Magazin (7) des Arbeitszubehörteils (5) ineinander gestapelten Schneidewerkzeuge (8, 8', 8", 8"', 8"") umfaßt, wobei die Verriegelungskappe (16) Mittel zum Festlegen (17) an dem Arbeitszubehörteil (5) aufweist.

2. Elektrisches Haushaltsgerät nach Anspruch 1, **dadurch gekennzeichnet, daß** die Verriegelungskappe (16) gestaltet ist, um sich den Konturen der ineinander gestapelten Schneidewerkzeuge (8, 8', 8", 8"', 8"") anzupassen.

3. Elektrisches Haushaltsgerät nach einem der Ansprüche 1 oder 2, **dadurch gekennzeichnet, daß** die Mittel zum Festlegen (17) der Verrieglungskappe (16) an dem Arbeitszubehörteil (5) aus einer der folgenden Kategorien ausgewählt sind: Mittel zum Festlegen durch Einrasten, Mittel zum Festlegen durch Verschrauben, Mittel zum Festlegen mit Bajonettverschluß.

4. Elektrisches Haushaltsgerät nach einem der Ansprüche 1 bis 3, **dadurch gekennzeichnet, daß** die Schneidewerkzeuge (8, 8', 8", 8"', 8"") einen kegelstumpfförmigen Körper (81) aufweisen und daß das Magazin (7) des Arbeitszubehörteils (5) eine Aufnahme (71) zum Aufnehmen und Anbringen definiert, die eine zur Form der Schneidewerkzeuge (8, 8', 8", 8"', 8"") ergänzende Form aufweist.

5. Elektrisches Haushaltsgerät nach einem der Ansprüche 1 bis 4, **dadurch gekennzeichnet, daß** die Schneidewerkzeuge (8, 8', 8", 8"', 8"") eine identische Größe aufweisen.

6. Elektrisches Haushaltsgerät nach einem der Ansprüche 1 bis 5, **dadurch gekennzeichnet, daß** das Arbeitszubehörteil (5) von der Antriebsbasis (2) lösbar ist, wobei die Antriebsbasis (2) und das Arbeitszubehörteil (5) jeweils einander ergänzende Befestigungsmittel aufweisen.

7. Elektrisches Haushaltsgerät nach einem der Ansprüche 1 bis 6, **dadurch gekennzeichnet, daß** die Drehantriebs- und -kupplungsmittel (88) eine Antriebsachse (9) umfassen, die sich innerhalb des Magazins (7) des Arbeitszubehörteils (5) entlang einer Achse Δ erstreckt, wobei die Antriebsachse (9) geeignet ist, über ein hinteres Ende (91) durch den Elektromotor in der Antriebsbasis (2) drehgeführt zu werden und geeignet ist, eines der Schneidewerkzeuge (8), das in dem Magazin (7) angebracht ist, mittels eines eingreifenden Kupplungsorgans (10), welches von einem vorderen Ende (92) getragen wird und geeignet ist, sich in ein in einem Boden (84) des Schneidewerkzeugs (8) vorgesehenes aufnehmendes Kupplungsorgan (12) einzufügen, drehend zu führen.

8. Elektrisches Haushaltsgerät nach Anspruch 7, **dadurch gekennzeichnet, daß** das Magazin (7) eine untere Innenwand (73) aufweist, die nach unten in Richtung einer Öffnung zum Einführen (74) der Schneidewerkzeuge (8, 8', 8", 8"', 8"") geneigt ist.

9. Elektrisches Haushaltsgerät nach einem der Ansprüche 1 bis 8, **dadurch gekennzeichnet, daß** das Arbeitszubehörteil (5) einen Schacht (14) zum Einführen der zuzubereitenden Lebensmittel aufweist, wobei der Schacht (14) über eine Öffnung (141) mit dem Magazin (7) in Verbindung steht, um einen Kontakt zwischen den in den Schacht (14) eingeführten Lebensmitteln und einem der Schneidewerkzeuge (8), das in dem Magazin (7) angeordnet ist und in dem Magazin (7) drehangetrieben wird, zu ermöglichen.

10. Elektrisches Haushaltsgerät nach Anspruch 9, **dadurch gekennzeichnet, daß** es einen Stößel (15) mit einer zum Innenquerschnitt des Schachtes (14) ergänzenden Form umfaßt, um die in den Schacht (14) eingeführten Lebensmittel gegen das in dem Magazin (7) angebrachte Schneidewerkzeug (8) zu drücken.

11. Elektrisches Haushaltsgerät nach einem der Ansprüche 1 bis 10, **dadurch gekennzeichnet, daß** die Verriegelungskappe (16) wenigstens eine Öffnung (163) aufweist, die einen Teil der Schneidewerkzeuge (8, 8', 8", 8"', 8""), die in der an dem Arbeitszubehörteil (5) angeordneten Verriegelungskappe (16) untergebracht sind, zum Vorschein kommen läßt.

12. Elektrisches Haushaltsgerät nach einem der Ansprüche 1 bis 11, **dadurch gekennzeichnet, daß** die Verriegelungskappe (16) Laschen (161) aufweist, die vorgesehen sind, um mit einem vorderen Rand (72) des Magazins (7) in Eingriff zu gelangen.

13. Verfahren zum Aufräumen und Aufbewahren von Schneidewerkzeugen (8, 8', 8", 8'", 8"") für ein elektrisches Haushaltsgerät (1) für die Zubereitung von Lebensmitteln, wobei die Schneidewerkzeuge (8, 8', 8", 8"', 8"") eine Geometrie aufweisen, die ihr Ineinanderstecken ermöglicht, um einen Werkzeugstapel zu bilden und wobei das elektrische Haushaltsgerät (1) ein Arbeitszubehörteil (5), das ein Magazin (7) aufweist, welches eine Aufnahme (71) mit einer zur Geometrie der Schneidewerkzeuge (8, 8', 8", 8"', 8"") im wesentlichen ergänzenden Form begrenzt, sowie Drehkupplungs- und -antriebsmittel (88) für eines der Schneidewerkzeuge (8, 8', 8", 8'", 8""), das in der Aufnahme (71) des Magazins (7) angebracht ist, umfaßt, welches Verfahren **dadurch gekennzeichnet ist, daß** die Schneidewerkzeuge (8, 8', 8", 8"', 8"") in dem Magazin (7) des Arbeitszubehörteils (5) ineinander gesteckt werden und daß der auf diese Weise gebildete Stapel in dem Magazin (7) mittels einer Verriegelungskappe (16) gehalten wird, die den Stapel wenigstens teilweise bedeckt und Mittel zum Festlegen (17) an dem Arbeitszubehörteil (5) aufweist.

14. Verfahren nach Anspruch 13, **dadurch gekennzeichnet, daß** die Schneidewerkzeuge (8, 8', 8", 8"', 8"") eine Kegelstumpfform aufweisen.

15. Verfahren nach Anspruch 13 oder Anspruch 14, **dadurch gekennzeichnet, daß** die Schneidewerkzeuge (8, 8', 8", 8"', 8"") in dem Magazin (7) des Arbeitszubehörteils (5) entlang einer Achse Δ ineinander gesteckt werden, die einer Achse zum Drehantreiben (9) der Schneidewerkzeuge (8, 8', 8", 8"', 8"") in dem Magazin (7) des Arbeitszubehörteils (5) entspricht.

16. Verfahren nach einem der Ansprüche 13 bis 15, **dadurch gekennzeichnet, daß** die Achse Δ horizontal verläuft oder gegenüber der Horizontalen geringfügig nach unten geneigt ist.
